# EUROPÄISCHE PATENTSCHRIFT

(11) **EP 2 898 041 B1**
(45) Veröffentlichungstag und Bekanntmachung des Hinweises auf die Patenterteilung: **05.12.2018**
(21) Anmeldenummer: 13745856.8
(22) Anmeldetag: 08.08.2013
(51) Int. Cl.: C09K 9/02, G01K 11/12, C08G 63/91, C08K 5/1545, C08L 1/12, C08L 67/04

(54) **THERMOCHROMES MATERIAL, DIESES ENTHALTENDE FORMKÖRPER UND DEREN VERWENDUNG**
THERMOCHROMIC MATERIAL, MOLDED ARTICLE COMPRISING SAID MATERIAL AND USE THEREOF
MATIÈRE THERMOCHROME, CORPS MOULÉ CONTENANT LADITE MATIÈRE, ET UTILISATION DE LADITE MATIÈRE

(30) Priorität: 24.09.2012 DE 102012018813
(43) Veröffentlichungstag der Anmeldung: 29.07.2015
(73) Patentinhaber: Fraunhofer-Gesellschaft zur Förderung der angewandten Forschung e.V., 80686 München (DE)
(72) Erfinder: LÖTZSCH, Detlef, 14059 Berlin (DE); RUHMANN, Ralf, 12685 Berlin (DE); SEEBOTH, Arno, 12557 Berlin (DE)
(74) Vertreter: Pfenning, Meinig & Partner mbB
(86) Internationale Anmeldenummer: PCT/EP2013/066604
(87) Internationale Veröffentlichungsnummer: WO 2014/044462

(56) Entgegenhaltungen:
- EP-A2- 1 026 221
- WO-A1-2005/021627
- US-A1- 2006 166 822
- US-A1- 2011 206 836

## Beschreibung

Die Erfindung betrifft ein thermochromes Material enthaltend mindestens ein Biopolymer, mindestens einen Naturfarbstoff sowie mindestens ein Reaktionsmedium, ausgewählt aus der Gruppe der Fettsäuren und deren Derivate, Gallussäure und deren Derivate sowie Mischungen hiervon. Das erfindungsgemäße thermochrome Material basiert dabei vollständig auf toxitätsfreien Naturprodukten. Die Verarbeitung zu Werkstoffen oder Formkörpern kann mittels konventioneller Extrusionstechnik in Form von Flachfolien, Blasfolien oder Platten bzw. Stegplatten erfolgen. Verwendung findet das thermochrome Material insbesondere in der Lebensmittelindustrie und der Medizintechnik.

Thermochromie beinhaltet die Eigenschaft eines Materials, in Abhängigkeit der Temperatur reversibel oder irreversibel seine Farbe zu ändern. Dies kann sowohl durch Änderung der Intensität und/oder des Wellenlängenmaximums erfolgen. Repräsentativ werden Beispiele und theoretische Hintergründe zum Mechanismus der temperaturgesteuerten Farbe beschrieben in Chromic Phenomena von P. Bamfield and M.I Hutchings (The Royal Society of Chemistry, 2010) und in Thermochromic Phenomena in Polymers von A. Seeboth and D. Lötzsch (Smithers Rapra Technology, 2008).

Materialien in unterschiedlichster Werkstoffform, darunter auch Polymerfolien mit thermochromen Eigenschaften, sind in der Vergangenheit vielfältig patentiert worden. Unabhängig, ob der thermochrome Effekt reversibler oder irreversibler Natur ist, anorganische oder organische Farbstoffe zum Einsatz kommen, letztere auch in Form von Kompositen mit Schmelzmitteln und/oder Entwicklern, ist allen Systemen gemeinsam, dass sie in irgendeiner Form immer toxische Ausgangsmaterialien enthalten. Klassisch hierfür ist beinahe in allen bestehenden organischen thermochromen Kompositen der Einsatz von Bisphenol als Entwickler. Als Farbstoffe gelangen Grundstrukturen von Triphenylmethanfarbstoffen, Pyridiniumphenolatbetaine, Sulfophthaleinstrukturen, Thyranine, Azofarbstoffe oder Fluranfarbstoffe zum Einsatz.

Anorganische thermochrome Pigmente, deren Farbwechsel auf eine temperaturgesteuerte Änderung der Modifikation beruht, basieren im Allgemeinen auf Salzen von Schwermetallen. Ein bekanntes Beispiel ist der Einsatz thermochromer anorganischer Pigmente als hotspot-Warnung für Pfannen oder als Siebdruck für Barcode. Das Kapseln von Schwermetallsalzen oder organischen thermochromen Kompositen bietet hier ebenfalls keine Alternative; Migrationseffekte können dauerhaft nicht unterbunden werden. Die zumeist verwendeten Melaminharze als Hülle für thermochrome Kapseln sind definitiv als Schutzschicht ungeeignet und zudem nicht für die Extrusionstechnologie geeignet.

So wird in EP 1084 860 die Schaltung eines Farbeffektes, basierend auf einem Donator-Akzeptor-System beschrieben, das auch in Form von Mikrokapseln mit einem Durchmesser von ca. 50 µm vorliegen kann. In EP 1 323 540 A2 wird ein thermochromes Material bestehend aus drei Komponenten beschrieben, welches ebenfalls mikroverkapselt ist. Mangelnde Lichtstabilität der thermochromen Komplexe soll entsprechend US 5,527,385 durch Zusätze wie Hydrazid-, Schwefel- oder Phosphorverbindungen entgegengewirkt werden. Dies bedeutet den Zusatz weiterer toxischer Verbindungen.

Die Herstellung polymerer thermochromer Werkstoffe mit Hilfe von Aufdrucken (Kaschieren) einer thermochromen Farbe ist eine praxisnahe Lösung für einige Anforderungen und Wünsche der Verpackungsindustrie, wo Toxizität eine untergeordnete Rolle spielt. So werden gemäß US 2002037421 Gläser mit einer Farbe zur Nutzung für den Sonnenschutz bedruckt oder entsprechend US 4,121,010 Polymere mit einer thermochromen Farbe, bestehend aus Sulfaten, Sulfiden, Arsen, Wismut, Zink und anderen Materialien, und deren Oxide, überzogen. Hierdurch wird sowohl das Einsatzgebiet stark beschränkt als auch durch das erforderliche zusätzliche Coating (Printtechnik) eine preisreduzierende kontinuierliche Technologie verhindert.

In US 2011/206836 A1 wird eine biobasierte Beschichtung, enthaltend ein polymerisiertes Öl, welches aus Öl, enthaltend Triglyceride mit ungesättigten Fettsäureketten besteht. Das Öl ist frei von Petroleum. Der Polymerisationskatalysator enthält ein thermochromes Material. Als spezifisches thermochromes Material ist mit Wolfram dotiertes Vanadiumoxid genannt.

In DE 103 39 442 B4 und US 7,662,466 B2 werden thermochrome Flachfolien beschrieben, die ebenfalls auf den Einsatz der oben genannten organischen Farbstoffe basieren.

Dies gilt auch für die in EP 1 157 802 beschriebene Erfindung. Hier werden beim Extrusionsblasformen nur in Teilbereichen der Wandstärke eines Kunststoffbehältnisses thermochrome Pigmente beigemischt. Dies geschieht durch Zusatz eines reversiblen thermochromen Pigmentes in Form von streifenförmigen Einlagerungen. Die thermochromen Pigmente erfordern zudem zusätzliche thermostabile Pigmente und werden dem Extrudat vor Austritt aus dem Extrusionskopf zugegeben oder aufgegeben.

Bis heute haben thermochrome Tinten, Siebdruckfarben, Coatings oder Folien keinen Einsatz in sensiblen Bereichen wie der Nahrungsmittelbranche oder Medizintechnik gefunden. Ein wesentlicher Grund ist mit Bestimmtheit der Einsatz von toxischen Verbindungen. Auch neueste thermochrome Farbstoffe mit Diazapentalenstruktur (G. Qian and Z. Y. Wang, Adv. Mater. 24, 2012, Seite 1582) bieten hier keinen Lösungsansatz.

Ausgehend hiervon war es Aufgabe der vorliegenden Erfindung, ein thermochromes Material bereitzustellen, dass sich in vielen Bereichen des täglichen Lebens, z.B. im Lebensmittelbereich, einsetzen lässt. Ebenso soll das thermochrome Material so beschaffen sein, dass die Weiterverarbeitung mittels Extrusionstechnik möglich ist.

Diese Aufgabe wird durch das thermochrome Material mit den Merkmalen des Anspruchs 1 und die extrudierten Formkörper mit den Merkmalen des Anspruchs 6 gelöst. In Anspruch 9 werden erfindungsgemäße Verwendungen angegeben. Die weiteren abhängigen Ansprüche zeigen vorteilhafte Weiterbildungen auf.

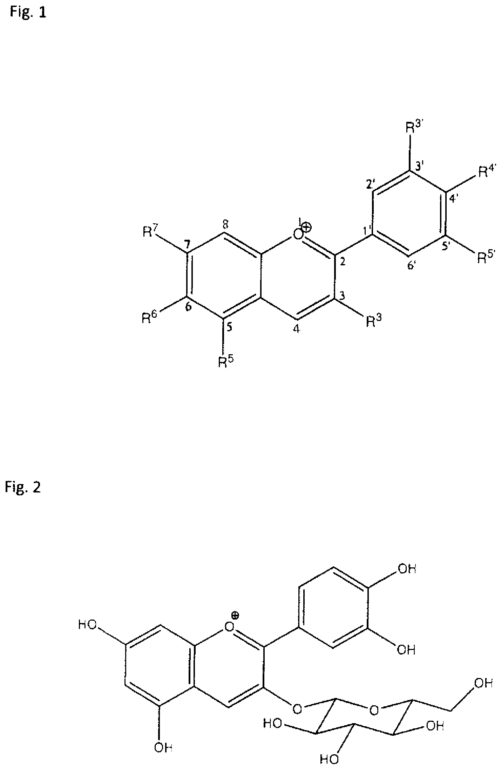

Erfindungsgemäß wird ein thermochromes Material bereitgestellt, das mindestens ein Biopolymer, mindestens einen Naturfarbstoff sowie mindestens ein Reaktionsmedium ausgewählt aus der Gruppe der Fettsäuren und deren Derivate, Gallussäure und deren Derivate sowie Mischungen hiervon enthält. Dabei handelt es sich bei allen im thermochromen Material enthaltenen Komponenten um für Lebensmittel zugelassene Bestandteile oder Zusatzstoffe, d.h. sämtliche Komponenten sind in der verwendeten Dosierung nicht toxisch. Hierunter wird verstanden, dass
das mindestens ein Biopolymer ausgewählt aus der Gruppe bestehend aus Polyhydroxybuttersäure, Celluloseacetat, Polymilchsäure sowie deren Copolymeren und Polymerblends,
der mindestens eine Naturfarbstoff ausgewählt ist aus der Gruppe bestehend aus Cyanidin, Delphinidin, Aurantinidin, Petunidin, Peonidin, Malvidin, Pelargondin, Rosinidin, Europinidin und Luteolinidin (die Grundstruktur ist in der Fig. 1 dargestellt) und
das das mindestens eine Reaktionsmedium ausgewählt ist aus der Gruppe bestehend aus Petroselinsäure, Palmitoleinsäure, Myristoleinsäure, Ölsäure, Elaidinsäure, Gadoleinsäure, Undecylensäure, Icosensäure, Vaccensäure, Cetoleinsäure, Erucasäure, Nervonsäure, Cervonsäure, Clupanodonsäure, Timnodonsäure, Linolsäure, Calendulasäure, Punicinsäure, Elaeostearinsäure, Archidonsäure, Ameisensäure, Essigsäure, Caprylsäure, Pelargonsäure, Caprinsäure, Laurinsäure, Myristinsäure, Palmitinsäure, Margarinsäure, Stearinsäure, Arachinsäure, Propionsäure, Buttersäure, Valeriansäure, Capronsäure, Önanthsäure, Behensäure, Lignocerinsäure, Cerotinsäure, Montansäure, Melissinsäure, Dodecylgallat, Octylgallat, Propylgallat, Phytansäure, Isovalerinsäure, ätherische Öle oder Mischungen hiervon.

Es ist erfindungsgemäß, dass als Naturfarbstoffe solche mit einer Anthocyanidinstruktur verwendet werden. Diese unterteilen sich in zuckerfreie Aglykone und Glykoside, wobei beide Unterstrukturen eingesetzt werden können. Als Lebensmittelzusatzstoffe sind Anthocyanidine unter der E-Nummer 163 zugelassen. Die vom pH-Wert abhängige Farbe von Anthocyanidinen in wässriger Lösung ist dabei bekannt, während die thermochromen Eigenschaften von Anthocyanidinen bislang nicht bekannt waren.
Erfindungsgemäße Anthocyanidine sind Cyanidin, Delphinidin, Aurantinidin, Petunidin, Peonidin, Malvidin, Pelargondin, Rosinidin, Europinidin und Luteolinidin. Die Grundstruktur ist in der Fig. 1 dargestellt.

Durch Variation der Reste R³ bis R⁷ (R mit -H, -OH, -OCH₃) können die Eigenschaften breit variiert werden. Die Bildung von Dimeren, Aggregaten/Chelaten sowohl untereinander als auch mit dem Biopolymer oder dem Reaktionsmedium wird ermöglicht. Wird in der Position R³ ein Zuckerrest eingeführt, gelangt man zu Glykosidstrukturen (Fig. 2).

Als Reaktionsmedium sind Gallussäure und deren Derivate, insbesondere Gallate, gesättigte, einfach ungesättigte oder mehrfach ungesättigte Fettsäuren und deren Derivate, insbesondere Ester, sowie verzweigte Carbonsäuren erfindungsgemäß. Ein wesentliches Eigenschaftsmerkmal der Carbonsäuren ist deren Selbstorganisation zu Dimeren.

Eine Vielzahl von Fettsäuren kann zur Ausbildung der Thermochromie genutzt werden. Vorteilhafterweise lassen sich thermochrome Eigenschaften in einem breiten Arbeitsbereich herstellen; dieser ist u.a. mit dem Schmelzpunkt der Fettsäuren gekoppelt und lässt sich zwischen -55 °C und + 81 °C durch die spezifischen Fettsäuren steuern. Bei Bedarf kann der Arbeitsbereich noch ausgeweitet werden.

Als Fettsäuren können sowohl ungesättigte wie gesättigte Fettsäuren sowie Mischungen hiervon Anwendung finden.

Die ungesättigten Fettsäuren sind ausgewählt aus der Gruppe bestehend aus Petroselinsäure, Palmitoleinsäure, Myristoleinsäure, Ölsäure, Elaidinsäure, Gedoleinsäure, Undecylensäure, Icosensäure, Vaccensäure, Cetoleinsäure, Erucasäure, Nervonsäure, Cervonsäure, Clupanodonsäure, Timnodonsäure, Linolsäure, Calendulasäure, Punicinsäure, Elaeostearinsäure , Arachidonsäure und Mischungen hiervon.

Die gesättigten Fettsäuren sind ausgewählt aus der Gruppe bestehend aus Ameisensäure, Essigsäure, Caprylsäure, Pelargonsäure, Caprinsäure, Larinsäure, Myristinsäure, Palmitinsäure, Margaringsäure, Stearinsäure, Arachinsäure, Propionsäure, Buttersäure, Valeriansäure, Capronsäure, Onanthsäure, Behensäure, Lignocerinsäure, Cerotinsäure, Montansäure, Melissinsäure und Mischungen hiervon.

Für den Fachmann ist leicht erkennbar, dass hier auch eine Vielzahl von Strukturderivaten wie Alpha-, Gamma- oder Beta-Strukturen genutzt werden können oder auch Ester-, Amin- oder Amidstrukturen. Es ist offensichtlich, dass die Fettsäuren oder ihre Derivate auch in Form von Gemischen verwendet werden können. So erweisen sich u.a. Ester der Stearinsäure, Palmitinsäure, Linolsäure, Erucasäure als besonders komplexstabilisierend. Fettsäuren und Fettsäureester werden in der Lebensmittelbranche unter den Nummern E 570 bzw. E 304 geführt.

Neben Fettsäuren sind Gallussäure und deren Derivate, besonders Esterverbindungen (Gallate), für den Einsatz als Reaktionsmedium erfindungsgemäß. Mischungen aus Fettsäuren und Gallaten sind ebenfalls einsetzbar. Gallate sind auch wie die Fettsäuren für Lebensmittel zugelassen. Beispielhaft sollen E 312 - Dodecylgallat, E 311 - Octylgallat und E 310 - Propylgallat genannt werden.

Als verzweigte Carbonsäuren sind Phytansäure, Isovalerinsäure oder ätherische Öle bevorzugt.

Erfindungsgemäß wird das toxizitätsfreie thermochrome Material durch die physikochemische Wechselwirkung zwischen Anthocyanidin, Biopolymer und Fettsäure ermöglicht. Ein temperaturgesteuerter Protonentransfer in der Anthocynidinstruktur löst die Änderung der Farbe aus. Hierbei kann sowohl die Intensität als auch das Wellenlängenmaximum geschaltet werden. So können über i) der Ausbildung oder Auflösung von Wasserstoffbrücken im System, ii) der Bildung von Domänen/Aggregaten/Chelaten, gesteuert vorzugsweise durch die Wechselwirkung der Fettsäure oder Gallate mit der polaren Polymerkette, z.B. mit CA/CTA, PHB oder PLA, iii) der Ausbildung geordneter Strukturen zwischen Biopolymer - Naturfarbstoff - Fettsäure und/oder Gallat, wie diese als selbstorientierende Systeme in Biomaterialien gut bekannt sind (siehe H. Ringsdorf, Angew. Chem. 104, 1990, 1310) oder auch iv) durch das Zusammenwirken der oben genannten drei Effekte i, ii und iii ein thermochromer Schalteffekt realisiert werden. Der Prozess kann reversibel oder irreversibel gestaltet werden. In Abhängigkeit der Temperatur erfolgen Umorientierungen auf molekularer Ebene, Bindungen werden verstärkt oder gelockert und ein Konzentrationsgradient des Naturfarbstoffes oder der Fettsäure und/oder Gallat im Polymervolumen, reversibel oder irreversibel, werden ermöglicht. So ändert sich die Wechselwirkung zwischen der Fettsäure und dem Anthocyanidin in Abhängigkeit der Temperatur, während gleichzeitig beide Verbindungen entweder jeweils einzeln oder als agierender Komplex mit der Polymerkette ihre Wechselwirkung ändern. Im Einzelfall werden alle Verbindungen in die Polymerstruktur über physikochemische Wechselwirkungen integriert, wobei diese sich dabei natürlich verändert. In diesem Fall bildet sich eine neue übergeordnete Polymerstruktur, die sich nicht weiter herunterbrechen lässt. Die Wechselwirkungen zwischen den unterschiedlichen Molekülen können sowohl über die polaren als auch dispersiven Struktureinheiten ausgelöst werden. Das System erhält dadurch eine außerordentliche thermodynamische Stabilität. Im Resultat ändern sich die optischen makroskopischen Eigenschaften. Bei der Differential Scanning Calorimetry (DSC) ist in diesem Falle nur noch ein Peak sichtbar, der sich vom Peak des reinen Polymers unterscheidet, Insbesondere für die Ausbildung übergeordneter Strukturen sind Glykoside geeignet. Durch die Zuckereinheit in R³-Position (Cyanidin-3-glucosid) kann eine Aggregatstruktur (Chelatkomplex) erzielt werden. Dieser Mechanismus wird in der Natur genutzt, um beispielsweise auch die Lichtstabilität der Naturfarbstoffe zu steigern. Die Zuckerreste sind in Schichten angeordnet, die durch die Sesselform zusätzlich stabilisiert werden. Es ist offensichtlich, dass die Zuckerstruktur zur weiteren Wechselwirkung mit Fettsäuren und/oder Gallaten befähigt ist.

Das molare Verhältnis zwischen den Ausgangsverbindungen Anthocyanidin und Fettsäure und/oder Gallat, einschließlich deren Derivaten und Mischungen, steuert maßgeblich den Protonentransfer im Naturfarbstoff und somit das thermochrome Verhalten. Im Folgenden werden hinsichtlich der Verarbeitung Massenverhältnisse angegeben. Bei Verwendung von Mischungen aus Fettsäuren und Gallaten können Verhältnisse von 1:99 oder 99:1 eingesetzt werden. Fettsäure oder Gallat oder deren Mischung werden in Bezug zum Anthocyanidinfarbstoff im 10-fachen bis 50-fachen Überschuss eingesetzt, vorzugsweise mit 15- bis 35-fachem Überschuss. Der Anthocyanidin-Fettsäure(und/oder Gallat)-Komplex befindet sich mit 2 - 38 % im Biopolymer, vorzugsweise mit 7 - 15 %.

Weitere Einflussgrößen auf das makroskopische optische Verhalten sind die Molmasse, der MFR-Wert und die kristalline/amorphe Struktur der eingesetzten Biopolymere.

Für den Fachmann der Extrusionstechnik ist deutlich, dass die verwendeten Technologieparameter wie die Temperaturen der jeweiligen Heizzonen, der Breitschlitzdüse oder Chill-Rolle, die Abzugsgeschwindigkeit, die Schneckengeometrie, Drehzahl und Massedruck oder Verweilzeit einen zusätzlichen Einfluss auf das resultierende thermochrome Verhalten der toxizitätsfreien Polymermaterialien besitzen.
Wesentliche Bestandteile der Erfindung sind dementsprechend einerseits die Herstellung von Thermochromie durch Wechselwirkung der Einsatzkomponenten einschließlich deren Langzeitstabilität und andererseits die Entwicklung einer Technologie zur Herstellung thermochromer Compounds bzw. Batchs/Masterbatchs. Das Compound bzw. Batch/Masterbatch kann im Extrusionsverfahren zu Folien, Platten, Stegplatten weiterverarbeitet werden. Die Schichtdicke der Folien liegt zwischen 50 und 300 µm. Platten können bis zu 5 mm dick sein. Die thermochromen Folien und Platten können mit weiteren Schichten coextrudiert werden. Diese zusätzlichen Schichten können weitere Funktionen in den Werkstoff oder das Bauteil wie Lichtstabilität, permanente Farben und somit ein resultierendes subtraktives Farbsystem oder erhöhte mechanische Stabilität in das Material einbringen.

Anhand der nachfolgenden Figuren und des Beispiels soll der erfindungsgemäße Gegenstand näher erläutert werden, ohne diesen auf die hier gezeigte spezifische Ausführungsform einschränken zu wollen.
Fig. 1 zeigt anhand einer chemischen Formel die Grundstruktur von Anthocyanidinen.
Fig 2. zeigt die chemische Formel der Grundstruktur eines Glykosins.

### Beispiel

Erfindungsgemäß kann eine toxizitätsfreie thermochrome Biopolymerfolie wie folgt hergestellt werden. In einem ersten Schritt wird ein Komplex bestehend aus Palmitinsäure, Laurylgallat und Cyanidinchlorid im Verhältnis 1:1,5:0,02 präpariert bei einer Temperatur oberhalb 115 °C und einer Reaktionsdauer von 15 min. In einem Zweischnecken-Compounder werden 8,5 Gew.-% des Komplexes mit 91,5 Gew.-% PLA 4060 zu einem Compound verarbeitet bei einer Schneckendrehzahl von 20 U/min. Die Temperaturen der Heizzonen 1 bis 5 betragen 175 °C / 185 °C / 185 °C / 180 °C / 160 °C. Im Ergebnis wird bei Raumtemperatur ein farbloses Compound erhalten, welches bei Erwärmung auf ca. 65 °C in den blauen Zustand wechselt. Der Effekt ist reversibel. In einem Einschneckenextruder wird das Compound nach bekanntem Verfahren in eine thermochrome Mono-PLA-Biopolymerfolie verarbeitet, wobei die Temperatur der Chill-Rolle 45 °C beträgt. Der reversible Farbwechsel der Folie ist wie beim Compound bei ca. 65 °C.

## Patentansprüche

1. Thermochromes Material enthaltend
mindestens ein Biopolymer,
mindestens einen Naturfarbstoff sowie
mindestens ein Reaktionsmedium,
**dadurch gekennzeichnet, dass** es sich bei allen Komponenten des thermochromen Materials um für Lebensmittel zugelassene Bestandteile oder Zusatzstoffe handelt, wobei hierunter verstanden wird, dass das mindestens eine Biopolymer ausgewählt ist aus der Gruppe bestehend aus Polyhydroxybuttersäure, Celluloseacetat, Polymilchsäure sowie deren Copolymeren und Polymerblends,
der mindestens einen Naturfarbstoff ausgewählt ist aus der Gruppe bestehend aus Cyanidin, Delphinidin, Aurantinidin, Petunidin, Peonidin, Malvidin, Pelargondin, Rosinidin, Europinidin, Luteolinidin oder Mischungen hiervon, und
das mindestens eine Reaktionsmedium ausgewählt ist aus der Gruppe bestehend aus Petroselinsäure, Palmitoleinsäure, Myristoleinsäure, Ölsäure, Elaidinsäure, Gadoleinsäure, Undecylensäure, Icosensäure, Vaccensäure, Cetoleinsäure, Erucasäure, Nervonsäure, Cervonsäure, Clupanodonsäure, Timnodonsäure, Linolsäure, Calendulasäure, Punicinsäure, Elaeostearinsäure, Archidonsäure, Ameisensäure, Essigsäure, Caprylsäure, Pelargonsäure, Caprinsäure, Laurinsäure, Myristinsäure, Palmitinsäure, Margarinsäure, Stearinsäure, Arachinsäure, Propionsäure, Buttersäure, Valeriansäure, Capronsäure, Önanthsäure, Behensäure, Lignocerinsäure, Cerotinsäure, Montansäure, Melissinsäure, Dodecylgallat, Octylgallat, Propylgallat, Phytansäure, Isovalerinsäure, ätherische Öle oder Mischungen hiervon.

2. Thermochromes Material nach einem der vorhergehenden Ansprüche, **dadurch gekennzeichnet, dass** das mindestens eine Biopolymer zur Flachfolien- oder Blasfolienextrusion oder zur Fertigung von Platten geeignet ist.

3. Thermochromes Material nach einem der vorhergehenden Ansprüche, **dadurch gekennzeichnet, dass** der thermochrome Effekt des Materials reversibel oder irreversibel ist.

4. Thermochromes Material nach einem der vorhergehenden Ansprüche, **dadurch gekennzeichnet, dass** der thermochrome Effekt durch physikochemische Wechselwirkungen der Komponenten hervorgerufen wird.

5. Thermochromes Material nach einem der vorhergehenden Ansprüche, **dadurch gekennzeichnet, dass** das thermochrome Material extrudierbar ist.

6. Extrudierter Formkörper enthaltend ein thermochromes Material nach einem der vorhergehenden Ansprüche.

7. Formkörper nach Anspruch 6, **dadurch gekennzeichnet, dass** der Formkörper eine Flachfolie oder eine Blasfolie ist, insbesondere mit einer Schichtdicke von 50 bis 300 µm.

8. Formkörper nach Anspruch 6, **dadurch gekennzeichnet, dass** der Formkörper eine Platte oder eine Stegplatte ist, insbesondere mit einer Dicke von 500 µm bis 5 mm.

9. Verwendung des thermochromen Materials nach einem der Ansprüche 1 bis 5 oder der Formkörper nach einem der Ansprüche 6 bis 8 in der Lebensmittelindustrie und Medizintechnik.

## Claims

1. Thermochromic material comprising
at least one biopolymer,
at least one natural dye and also
at least one reaction medium,
**characterised in that** all the components of the thermochromic material concern components or additives which are permitted for foodstuff, wherein this is understood to mean that
the at least one biopolymer is selected from the group consisting of polyhydroxybutanoic acid, cellulose acetate, polylactic acid and also the copolymers and polymer blends thereof,
the at least one natural dye is selected from the group consisting of cyanidin, delphinidin, aurantinidin, petunidin, peonidin, malvidin, pelargondin, rosinidin, europinidin, luteolinidin or mixtures hereof,
the at least one reaction medium is selected from the group consisting of petroselinic acid, palmitoleic acid, myristoleic acid, oleic acid, elaidic acid, gadoleic acid, undecylenic acid, icosenic acid, vaccenic acid, cetoleic acid, erucic acid, nervonic acid, cervonic acid, clupanodonic acid, timnodonic acid, linoleic acid, calendic acid, punicic acid, eleostearic acid, arachidonic acid, formic acid, acetic acid, caprylic acid, pelargonic acid, caproic acid, laroic acid, myristic acid, palmitic acid, margaric acid, stearic acid, arachic acid, propionic acid, butyric acid, valeric acid, caproic acid, onanthic acid, behenic acid, lignoceric acid, cerotic acid, montanic acid, melissic acid, dodecylgallate, octylgallate, propylgallate, phytanic acid, isovaleric acid, etheric oils or mixtures hereof.

2. Thermochromic material according to one of the preceding claims, **characterised in that** the at least one biopolymer is suitable for flat film or blown film extrusion or for manufacture of sheets.

3. Thermochromic material according to one of the preceding claims, **characterised in that** the thermochromic effect of the material is reversible or irreversible.

4. Thermochromic material according to one of the preceding claims, **characterised in that** the thermochromic effect is produced by physicochemical interactions of the components.

5. Thermochromic material according to one of the preceding claims, **characterised in that** the thermochromic material is extrudable.

6. Extruded moulded article comprising a thermochromic material according to one of the preceding claims.

7. Moulded article according to claim 6, **characterised in that** the moulded article is a flat film or a blown film, in particular with a layer thickness of 50 to 300 µm.

8. Moulded article according to claim 6, **characterised in that** the moulded article is a sheet or a multiskin sheet, in particular with a thickness of 500 µm to 5 mm.

9. Use of the thermochromic material according to one of the claims 1 to 5 or of the moulded articles according to one of the claims 6 to 8 in the foodstuff industry and medical technology.

## Revendications

1. Matériau thermochrome contenant
au moins un biopolymère,
au moins un colorant naturel, ainsi que
au moins un milieu réactionnel,
**caractérisé en ce que**, pour ce qui concerne tous les composants du matériau thermochrome, il s'agit de constituants ou d'additifs alimentaires, ce par quoi on entend que l'au moins un biopolymère est choisi dans le groupe consistant en le poly(acide hydroxybutyrique), l'acétate de cellulose, le poly(acide lactique), ainsi que les copolymères et mélanges de polymères de ceux-ci,
l'au moins un colorant naturel est choisi dans le groupe consistant en la cyanidine, la delphinidine, l'aurantinidine, la pétunidine, la péonidine, la malvidine, la pélargondine, la rosinidine, l'europinidine, la lutéolinidine, ou les mélanges de celles-ci, et
l'au moins un milieu réactionnel est choisi dans le groupe consistant en l'acide pétrosélinique, l'acide palmitoléique, l'acide myristoléique, l'acide oléique, l'acide élaïdique, l'acide gadoléique, l'acide undécylénique, l'acide icosénique, l'acide vaccénique, l'acide cétoléique, l'acide érucasique, l'acide nervonique, l'acide cervonique, l'acide clupanodonique, l'acide timnodonique, l'acide linoléique, l'acide calendulique, l'acide punicique, l'acide élaéostéarique, l'acide arachidonique, l'acide formique, l'acide acétique, l'acide caprylique, l'acide pélargonique, l'acide caprique, l'acide laurique, l'acide myristique, l'acide palmitique, l'acide margarique, l'acide stéarique, l'acide arachidique, l'acide propionique, l'acide butyrique, l'acide valérique, l'acide capronique, l'acide oenantoïque, l'acide béhénique, l'acide lignocérique, l'acide cérotique, l'acide montanique, l'acide mélissique, le gallate de dodécyle, le gallate d'octyle, le gallate de propyle, l'acide phytanoïque, l'acide isovalérique, les huiles essentielles ou les mélanges de ceux-ci.

2. Matériau thermochrome selon l'une des revendications précédentes, **caractérisé en ce que** l'au moins un biopolymère convient à une extrusion de feuilles plates ou de feuilles soufflées, ou à la fabrication de plaques.

3. Matériau thermochrome selon l'une des revendications précédentes, **caractérisé en ce que** l'effet thermochrome du matériau est réversible ou irréversible.

4. Matériau thermochrome selon l'une des revendications précédentes, **caractérisé en ce que** l'effet thermochrome est occasionné par des interactions physico-chimiques des composants.

5. Matériau thermochrome selon l'une des revendications précédentes, **caractérisé en ce que** le matériau thermochrome est extrudable.

6. Objet moulé extrudé contenant un matériau thermochrome selon l'une des revendications précédentes.

7. Objet moulé selon la revendication 6, **caractérisé en ce que** l'objet moulé est une feuille plate ou une feuille soufflée, présentant en particulier une épaisseur de couche de 50 à 300 µm.

8. Objet moulé selon la revendication 6, **caractérisé en ce que** l'objet moulé est une plaque ou une plaque nervurée, présentant en particulier une épaisseur de 500 µm à 5 mm.

9. Utilisation du matériau thermochrome selon l'une des revendications 1 à 5 ou des objets moulés selon l'une des revendications 6 à 8 dans l'industrie alimentaire et en technique médicale.
